# FASCICULE DE BREVET EUROPEEN

(11) **EP 4 100 700 B1**
(45) Date de publication et mention de la délivrance du brevet: **12.03.2025**
(21) Numéro de dépôt: 21700776.4
(22) Date de dépôt: 19.01.2021
(51) Int. Cl.: G01C 21/36

(54) **PROCÉDÉ D'ELABORATION D'INSTRUCTIONS DE GUIDAGE ROUTIER**
VERFAHREN ZUR ERSTELLUNG VON STRASSENLEITANWEISUNGEN
METHOD FOR PREPARING ROAD GUIDANCE INSTRUCTIONS

(30) Priorité: 05.02.2020 FR 2001123
(43) Date de publication de la demande: 14.12.2022
(73) Titulaire: Ampere SAS, 92100 Boulogne-Billancourt (FR); NISSAN MOTOR Co., Ltd., Yokohama-shi, Kanagawa 221-0023 (JP)
(72) Inventeur: COSTA, Frederic, 91190 Gif sur Yvette (FR); PATTEYN, Léa, 33650 La BREDE (FR)
(74) Mandataire: Renault Group
(86) Numéro de dépôt international: PCT/EP2021/051068
(87) Numéro de publication internationale: WO 2021/156050

(56) Documents cités:
- EP-A1- 0 577 782
- EP-A1- 1 947 421
- EP-B1- 0 577 782
- EP-B1- 1 947 421
- FR-A1- 2 824 945
- FR-A1- 3 078 565
- FR-B1- 2 824 945
- US-A1- 2010 250 126
- US-A1- 2013 096 822

## Description

La présente invention concerne de manière générale les systèmes de guidage, et en particulier (mais pas seulement) les systèmes de guidage intégrés dans les véhicules automobiles.

Elle concerne plus particulièrement un procédé d'élaboration d'instructions de guidage vocales à destination d'un individu, comprenant des étapes de :
- détermination par un calculateur d'un trajet à effectuer,
- acquisition d'au moins une image de l'environnement de l'individu,
- traitement de ladite image pour y détecter au moins un objet présent dans l'environnement et pour caractériser ledit objet, et
- établissement et émission d'une instruction de guidage vocale fournissant à l'individu une information pour réaliser une manœuvre afin de suivre ledit trajet.

Elle concerne également un dispositif de génération d'instructions de guidage vocales.

Elle s'applique préférentiellement au cas où l'individu est le conducteur d'un véhicule automobile.

### ETAT DE LA TECHNIQUE

Les systèmes de navigation et de positionnement par satellite sont particulièrement efficaces et appréciés pour la détermination d'un trajet à effectuer, en particulier pour un conducteur d'un véhicule.

L'avantage par rapport à une carte papier est considérable, notamment car la position de l'individu est actualisée en temps réel. La plupart des systèmes de navigation affiche les directions à suivre sur des cartes correspondant à des représentations schématiques de l'environnement du véhicule.

Généralement, un tel système de navigation est conçu pour émettre des instructions de guidage routier à l'endroit du conducteur de deux façons différentes, sous une forme visuelle grâce à un écran d'affichage, et sous une forme vocale grâce aux enceintes équipant le véhicule.

La représentation visuelle de la manœuvre à réaliser sur l'écran d'affichage n'est pas toujours claire car les cartographes altèrent les distances, les angles entre des axes routiers. Il est parfois difficile pour le conducteur de bien comprendre la manœuvre à réaliser.

Les instructions des systèmes de navigation par leur représentation visuelle et les instructions vocales associées ne sont pas toujours cohérentes et soulèvent des incompréhensions de la part du conducteur par rapport à la manœuvre à réaliser et à la perception de l'infrastructure routière, sa configuration et l'environnement de conduite.

On observe notamment qu'actuellement, les instructions de guidage vocales sont générées de façon systématique, à la façon d'une feuille de route, en fonction de la distance entre le véhicule et la prochaine manœuvre à effectuer.

Il arrive donc fréquemment que ces instructions soient peu adaptées à l'environnement, répétitives et prévisibles, voire en décalage par rapport à ce qu'attendrait un conducteur.

Un autre inconvénient des systèmes de navigations connus est que les instructions sont générées sans lien les unes avec les autres. Les instructions sont indépendantes les unes des autres. Le contenu de chaque instruction ne tient pas compte des informations énoncées dans les précédentes instructions et des prochaines instructions à venir en fonction des manœuvres que le conducteur doit réaliser

Ces inconvénients amènent en pratique, une majorité d'utilisateurs à désactiver la fonction vocale du système de navigation.

Document FR3078565 concerne un procédé d'élaboration d'instructions de guidage routier adaptatives à l'environnement, comprenant des étapes de : - détermination d'un trajet entre une position de départ et une destination souhaitée, à partir d'une base de données cartographiques ; - acquisition d'une image dans la direction de vision de l'individu ; - recherche d'au moins un point d'intérêt visible sur l'image acquise ; - évaluation de la visibilité du point d'intérêt sur l'image acquise au moyen d'un niveau de visibilité; - génération d'une instruction de guidage mettant en évidence une direction à prendre par rapport au point d'intérêt ; et - transmission de l'instruction de guidage à destination de l'individu.

### PRESENTATION DE L'INVENTION

La solution est donnée par les caractéristiques de la revendication indépendante. Des variations sont décrites par les caractéristiques des revendications dépendantes.

Afin de remédier aux inconvénients précités de l'état de la technique, la présente invention propose un procédé d'élaboration d'instructions de guidage vocales tel que défini dans l'introduction, dans lequel il est prévu une étape de détermination d'un niveau de complexité de ladite manœuvre, et dans lequel, à l'étape d'établissement, ladite instruction de guidage vocale est formulée en utilisant un indice qui est déduit de la caractérisation dudit objet, seulement si le niveau de complexité de ladite manœuvre est supérieure à un premier seuil.

En d'autres termes, l'invention propose de générer des instructions de guidage vocales plus ou moins élaborées, selon la complexité de la situation rencontrée.

A titre d'exemple, si le conducteur se trouve face à une situation simple telle qu'un croisement en croix, et qu'aucun objet ne vient gêner la vue que le conducteur a sur le croisement, l'instruction de guidage vocale est élaborée sans y ajouter de détail particulier.

En revanche, dans une situation plus complexe, par exemple car un objet (tel qu'un camion) cache une partie de l'intersection, ou parce que l'intersection elle-même est plus complexe, l'instruction de guidage vocale est élaborée en y ajoutant des indices permettant au conducteur de se repérer. Il peut s'agir d'indices visuels (par exemple le camion, un panneau, une infrastructure routière) ou d'autres types d'indice, tels que par exemple des indices contextuels (afin par exemple d'annoncer au conducteur quand il doit tourner).

L'invention propose ainsi de générer des instructions de guidage vocales de façon aussi proche que possible de la façon qu'un copilote humain emploierait. De cette manière, la facilité de compréhension de ces instructions est accrue et la fréquence de ces instructions est adaptée, ce qui permet de réduire la charge cognitive demandée au conducteur, et ce qui réduit les erreurs et les hésitations du conducteur.

D'autres caractéristiques avantageuses et non limitatives du procédé conforme à l'invention, prises individuellement ou selon toutes les combinaisons techniquement possibles, sont les suivantes :
- ledit indice est un indice visuel immédiatement ou prochainement visible par l'individu, ou un indice contextuel renseignant l'individu sur le moment où il doit réaliser ladite manœuvre ;
- ladite instruction de guidage vocale étant structurée en apposant au moins une action et ledit indice ;
- le niveau de complexité est calculé en fonction de l'un au moins des critères suivants : la position du véhicule par rapport à la zone où ladite manœuvre doit être réalisée, le type d'infrastructure routière présente dans la zone où ladite manœuvre doit être réalisée, la tension ressentie par l'individu, l'importance du trafic routier, le nombre d'objets détectés sur une partie au moins de l'image acquise, la connaissance de l'infrastructure routière par l'individu, la phase dans laquelle le véhicule se trouve ;
- si l'infrastructure routière est un rond-point, le niveau de complexité est calculé en fonction de l'un au moins des critères suivants : l'angle entre un axe d'arrivée de l'individu sur le rond-point et un axe de sortie de l'individu hors du rond-point, l'angle entre au moins deux routes débouchant sur le rond-point, le nombre de routes débouchant sur le rond-point, la différence entre le nombre d'entrées sur le rond-point et le nombre de sorties hors du rond-point, le nombre de voies présentes sur le rond-point, et le diamètre extérieur du rond-point ;
- ledit indice étant un indice visuel visible par l'individu, si, entre le moment auquel l'instruction de guidage vocale a été émise vocalement et le moment où la manœuvre doit être réalisée, l'indice visuel disparait de l'environnement visible par l'individu, il est prévu une étape de génération d'une nouvelle instruction de guidage vocale n'utilisant pas ledit indice visuel ;
- ledit indice étant un indice visuel visible par l'individu, si, entre le moment auquel l'instruction de guidage vocale a été émise vocalement et le moment où la manœuvre doit être réalisée, un autre indice visuel non distinguable de l'indice visuel utilisé dans l'instruction de guidage vocal apparaît dans l'environnement visible par l'individu, il est prévu une étape de génération d'une nouvelle instruction de guidage vocale différente de l'instruction de guidage vocale qui a été émise vocalement
- selon l'invention, si le niveau de complexité de ladite manœuvre est supérieur à un second seuil strictement supérieur audit premier seuil, ladite instruction de guidage vocale est générée en utilisant deux indices ;
- il est prévu de déterminer un coût relatif à une durée ou à une distance supplémentaire que provoquerait une erreur de suivi dudit trajet, et le niveau de complexité est déterminé en fonction dudit coût ;
- il est prévu de distinguer au moins deux phases distinctes et successives préalables à la réalisation de ladite manœuvre, dont une phase d'anticipation de la manœuvre au cours de laquelle une instruction de guidage vocale peut être émise pour indiquer à l'individu comment se positionner pour aborder la manœuvre et une phase de description au cours de laquelle une instruction de guidage vocale est émise pour indiquer à l'individu comment réaliser la manœuvre, et dans lequel les instructions de guidage vocales émises au cours de ces phases utilisent des indices distincts ;
- pendant la phase d'anticipation, il est prévu d'énoncer une instruction de guidage vocale si la route empruntée ou à emprunter contient plusieurs voies ;
- l'indice utilisé pendant la phase d'anticipation dans l'instruction de guidage vocale fait référence à des panneaux uniquement si l'individu se trouve hors d'une agglomération ;
- il est en outre prévu au moins une autre phase qui suit la phase de description et au cours de laquelle une instructions de guidage vocale peut être élaborée, ladite autre phase étant une phase d'accompagnement simultanée à ladite manœuvre, ouune phase de réassurance subséquente à ladite manœuvre et permettant d'indiquer à l'individu s'il a bien réalisé la manœuvre, ou une phase de continuité permettant de renseigner l'individu sur le caractère actif dudit procédé d'élaboration ;
- si l'instruction de guidage vocale émise pendant la phase de description ne faisait référence à aucun repère visuel et que le véhicule ralentit, il est prévu au cours de la phase d'accompagnement d'émettre une instruction de guidage vocale utilisant un indice ;
- au cours de la phase de réassurance, il est prévu d'émettre une instruction de guidage vocale utilisant un repère visuel distinct du ou des indices visuels utilisés dans la ou les instructions de guidage vocales émises pendant les phases précédentes ; et
- au cours de la phase de continuité, il est prévu d'élaborer une instruction de guidage vocale différente selon que le rayon de courbure de la route empruntée est inférieur ou supérieur à un seuil.

Selon un aspect de l'invention, l'étape de détermination par un calculateur d'un trajet à effectuer comprend la récupération auprès d'une base de données cartographiques de repères statiques visuels localisés sur ledit trajet et d'attributs associés auxdits repères statiques visuels et la détermination d'un attribut commun à plusieurs repères statiques visuels. L'instruction de guidage vocale est formulée à l'étape d'établissement en utilisant un indice comprenant l'attribut commun lorsque l'objet est caractérisé comme comprenant l'attribut commun dans l'étape de traitement de l'image.

Selon un aspect de l'invention, les repères statiques visuels sont des panneaux routiers, l'attribut commun comprend un nom qui est inscrit sur un panneau routier ou une couleur de fond d'un panneau routier, l'objet est un panneau routier.

Selon un aspect de l'invention, l'étape de traitement de ladite image comprend la détection de plusieurs objets, le procédé d'élaboration comprend en outre une étape de classification des objets détectés, un objet caractérisé comme ayant l'attribut commun étant classé prioritaire, l'objet sélectionné pour l'étape d'établissement étant l'objet classé prioritaire.

L'invention propose également un dispositif de génération d'instructions de guidage routier adaptées à l'environnement, comprenant :
- un moyen d'acquisition d'images de l'environnement,
- une base de données cartographiques,
- un système de navigation et de géolocalisation,
- un module de traitement qui est adapté à recevoir et combiner des éléments provenant du moyen d'acquisition, de la base de données cartographiques et du système de navigation et de géolocalisation, et qui est programmé pour mettre en œuvre un procédé tel que précité, et
- un émetteur vocal adapté à transmettre une indication à l'individu.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

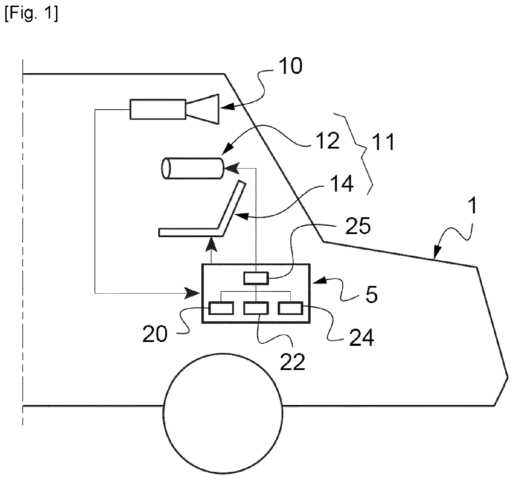

[Fig. 1] est une vue schématique d'une partie avant d'un véhicule automobile équipé d'un dispositif de génération d'instructions de guidage routier conforme à l'invention.

La présente invention pourra de façon préférentielle être utilisée dans un véhicule automobile quelconque (voiture, camion, moto...).

Sur la figure 1, on a représenté schématiquement l'habitacle d'un véhicule automobile 1 équipé d'un dispositif de génération d'instructions de guidage routier permettant de mettre en œuvre l'invention.

Ce dispositif comprend des moyens d'acquisition d'images de l'environnement du véhicule, une unité de guidage 5 et une interface 11 adaptée à transmettre des instructions de guidage au conducteur du véhicule automobile 1.

Les moyens d'acquisition d'images comportent par exemple ici une caméra 10 orientée vers l'avant du véhicule, et qui permet d'acquérir des images de l'environnement vu par le conducteur lorsque ce dernier a son regard tourné vers la route.

L'interface 11 comporte au moins un système de transmission d'un signal audio 12. En complément, il comporte ici un écran 14 tactile. En variante, il pourrait être dépourvu d'écran.

Le système de transmission du signal audio 12 est conçu pour transmettre des indications vocales à l'individu. Il est disposé dans l'habitacle, à une distance de l'individu telle que ce dernier peut entendre clairement les indications vocales communiquées. Par exemple, il s'agit des enceintes (ou « haut-parleur ») installées dans le véhicule pour l'écoute par exemple de la radio ou bien du haut-parleur d'un système nomade tel qu'un téléphone ou un dispositif de navigation externe.

L'unité de guidage 5 comporte une base de données cartographiques 20, un système de navigation et de géolocalisation 22, une mémoire informatique (ci-après appelée « mémoire 24 ») et un calculateur (ci-après appelée « module de traitement 25 »).

La base de données cartographiques 20 comprend des données de cartes bidimensionnelles voire tridimensionnelles, et notamment les emplacements (longitude et latitude) des axes routiers dans un espace donné (par exemple en Europe). La base de données cartographiques 20 comprend également des informations additionnelles telles que la forme des bâtiments, la localisation des stations-services et des lieux caractéristiques de l'environnement (par exemple les monuments historiques ou les fleuves), le revêtement des routes (pavées, en terre, goudronnées...). Les données cartographiques sont prévues pour pouvoir être lues par le module de traitement 25.

Avantageusement la base de données cartographiques 20 comprend des repères statiques visuels tels que des panneaux routiers et des attributs associés à chaque panneau routier tels que la couleur de fond du panneau, la direction ou le nom qui y est inscrit.

Le système de navigation et de géolocalisation 22 est adapté à déterminer la position courante du véhicule automobile dans l'espace et à déterminer un trajet entre la position courante (ou position de départ) du véhicule automobile 1 et la destination souhaitée, compte tenu des données stockées dans la base de données cartographiques 20. Le système de navigation et de géolocalisation 22 peut par exemple être un système de navigation et de positionnement par satellite (ou « GPS » selon l'acronyme couramment utilisé). La position courante du véhicule et le trajet sont prévus pour pouvoir être lus par le module de traitement 25.

Le trajet déterminé par le système de navigation et de géolocalisation 22 est stocké dans la mémoire 24. La mémoire 24 stocke également des paramètres tels que des valeurs seuils utiles à la mise en œuvre de l'invention. Tous les éléments stockés dans la mémoire 24 sont susceptibles d'être lus par le module de traitement 25. Ces éléments seront détaillés dans la suite de cet exposé.

Le module de traitement 25 est programmé pour recevoir et combiner les différents éléments provenant de la caméra 10, de la base de données cartographiques 20, du système de navigation et de géolocalisation 22 et de la mémoire 24. Le module de traitement 25 est également programmé pour transmettre des données aux enceintes 12 et à l'écran 14 afin de communiquer des indications de guidage à l'individu. En pratique, ce module de traitement 25 est formé par un microcontrôleur.

Le dispositif de génération d'instructions de guidage décrit ci-dessus permet de mettre en œuvre le procédé décrit ci-après.

### Etape S1 : détermination du trajet

Ce procédé débute lorsque le véhicule automobile 1 est mis en route. Alors, le module de traitement 25 détermine, au cours d'une première étape, le trajet que le véhicule automobile 1 doit emprunter.

Pour cela, la position courante (de départ) est déterminée grâce au système de navigation et de géolocalisation 22. En variante, l'individu peut préciser une position de départ différente de la position à laquelle il se trouve actuellement en introduisant manuellement la position de départ visée. Par exemple, l'individu peut enregistrer la position de départ visée via l'écran 14.

L'individu précise ensuite une destination souhaitée. Par exemple, la destination souhaitée peut être saisie sur l'écran 14.

Le module de traitement 25 combine la position de départ, la destination souhaitée ainsi que les données cartographiques correspondant à la zone géographique concernée. Le module de traitement 25 transmet ces informations au système de navigation et de géolocalisation 22 qui génère ensuite un trajet.

Le trajet déterminé est stocké dans la mémoire 24.

Avantageusement, le module de traitement 25 récupère auprès de la base de données cartographiques 20, des panneaux routiers qui sont localisés sur ledit trajet, ainsi que des attributs associés auxdits panneaux. Comme cela sera mieux expliqué dans la suite, le module de traitement 25 est apte à déterminer si plusieurs panneaux ont un attribut commun, identifier un attribut commun et les panneaux comprenant ledit attribut commun.

Le trajet est constitué de tronçons de route. Un tronçon de route est par exemple défini comme étant une partie d'un axe routier s'étendant entre deux intersections successives.

Chaque tronçon de route peut alors être caractérisé par de multiples paramètres, tels que par exemple le nombre de voies qu'il comporte, le ou les sens de circulation autorisé(s), le type d'intersection, le nombre de voies entrantes et sortantes à chaque intersection...

Le trajet passe par un grand nombre de points de passage tels que par exemple :
- des infrastructures routières (un échangeur, un rond-point, un croisement...),
- des communes ou des lieux-dits,
- des lieux significatifs (pharmacie, boulangerie, centre commercial, fontaine, abribus),
- des lieux remarquables (musée, monument, cathédrale, gare, aéroport ...).

A ce stade, avant de décrire la suite du procédé, on peut définir d'autres concepts qui seront utiles à la compréhension du présent exposé.

Le premier concept est celui « d'action ». Il s'agit d'un mouvement unitaire à réaliser par le véhicule (par exemple « positionnez-vous sur la voie de la droite », « suivez la voiture rouge »).

Le concept de « cible » désigne la zone où doit se positionner le véhicule automobile. Il peut s'agit d'éléments d'infrastructure routière (feu de signalisation, panneau stop, panneau de direction, axe routier...).

Le concept de « manœuvre » désigne un enchaînement d'une ou plusieurs actions permettant d'atteindre une « finalité ». Une manœuvre est réalisée pour adapter la position du véhicule automobile par rapport à l'infrastructure routière et pour atteindre la finalité. Pour une même manœuvre, plusieurs couples d'une action et d'une cible peuvent être concaténés. Par exemple, une manœuvre peut être énoncée de la façon suivante : « Positionnez-vous sur la voie de gauche, puis tournez à gauche pour aller sur l'autoroute X ».

Le concept « d'indice » recouvre tout élément de langage pouvant être utilisé dans une instruction de guidage vocale, et qui, lorsqu'il est utilisé, est défini sur la base des images acquises par la caméra afin de faciliter la compréhension de la situation par le conducteur du véhicule.

Le concept « d'indice visuel » (ou de « repère visuel ») désigne des éléments statiques (axes routiers, panneaux, infrastructures routières, et plus généralement tout élément répertorié dans la base de données cartographiques 20) ou dynamiques (véhicules, piétons ou plus généralement tout élément détectable par le module de traitement 25 sur les images acquises par la caméra 10), qui peuvent être utilisés pour décrire une action à réaliser ou à quel moment la réaliser. Ces éléments permettent d'enrichir une instruction de guidage soit en y ajoutant une précision (par exemple « Tournez à droite après le feu ») soit en la décrivant par rapport à cet élément (par exemple « Longez le bâtiment bleu »).

Le concept « d'indice contextuel » (ou « indice temporel ») désigne à quel moment doit se dérouler la manœuvre. Cette information indique le temps que le conducteur a pour réaliser la manœuvre. Par exemple, un tel indice pourra s'énoncer de la façon suivante : « maintenant », « tout de suite », « dès que possible », « au rond-point », « au feu de signalisation ».

Le concept « d'attribut », pour un indice visuel ou une cible, désigne une caractéristique de cet indice visuel ou de cette cible, permettant de différencier ce dernier parmi d'autres repères. Il peut s'agir d'une couleur, d'un texte, d'une direction, d'un type d'axe routier, d'une largeur de voie, d'un type de revêtement...

On peut considérer deux catégories d'attributs :
- les attributs égocentrés, c'est-à-dire relatifs à la position du véhicule automobile 1 (localisation de la cible en fonction de la position du véhicule, positionnement des différents éléments entourant le véhicule, numéro de la sortie d'un rond-point compte tenu de la position du véhicule, positionnement à adopter sur la voie...),
- les attributs exocentrés, c'est-à-dire positionnés de façon absolue (localisation d'un indice visuel en fonction d'un ou de plusieurs repères fixes de l'environnement, qui ne varie donc pas avec la position du véhicule, par exemple un numéro d'une voie sur un axe à plusieurs voies...).

Une cible sera généralement formée par un attribut égocentré, tandis qu'un indice visuel sera généralement formé par un attribut exocentré.

Le concept de « critère de familiarité » désigne des éléments de langage qui permettent de renforcer le côté humain d'une formulation d'une instruction de guidage. A titre d'exemple, il peut s'agir de formulations telles que « Restez bien sur votre voie », « Dans un premier temps, nous irons vers », « Ensuite, prenez à gauche ». Ce concept désigne aussi des éléments de langage à fonction sécuritaire (par exemple « Faites attention au virage »).

Le concept de « repère géographique » désignera la position d'un indice visuel par rapport à une cible, et pourra s'énoncer ainsi : « au bout de », « juste après », « entre », « complètement à droite », « légèrement à droite », « en face », « tout droit », « en direction de » ...

### Etape S2 : acquisition vidéo

Une fois que le véhicule a démarré, la caméra 10 acquiert des images de l'environnement du véhicule, et les transmet au module de traitement 25. On peut envisager que toutes les images acquises par la caméra 10 soient traitées par le module de traitement 25, ou seulement une partie de celles-ci, à une fréquence supérieure au Hertz.

Le module de traitement 25 est programmé pour traiter ces images de façon à élaborer des instructions de guidage vocales qui permettent au conducteur de savoir notamment quelle manœuvre il doit prochainement effectuer. Il est programmé pour élaborer une partie au moins de ces instructions en tenant compte de l'environnement visible par le conducteur.

Lorsque le véhicule suit le trajet défini par le conducteur, le module de traitement 25 suit la progression de ce véhicule grâce au système de navigation et de géolocalisation 22. Cela lui permet de prévoir, en amont de chaque intersection, si le véhicule doit effectuer une manœuvre et, si tel est le cas, quelle manœuvre il doit effectuer.

Chaque manœuvre que le véhicule doit effectuer est alors décomposée par le module de traitement 25 en cinq phases successives au cours de chacune desquelles une instruction de guidage vocale pourra, si nécessaire, être élaborée puis émise.

La première phase est une phase d'anticipation permettant de dire au conducteur comment positionner son véhicule sur la route afin d'aborder le prochain évènement (intersection, rond-point...) de la meilleure façon possible.

La seconde phase est une phase de description permettant d'informer le conducteur de la manœuvre qu'il devra réaliser, de manière qu'il puisse la comprendre avant de devoir l'exécuter.

La troisième phase est une phase d'accompagnement dédiée à l'assistance au conducteur pendant la manœuvre afin de renforcer sa confiance.

La quatrième phase est une phase de réassurance permettant de confirmer au conducteur qu'il a bien réalisé la bonne manœuvre.

La cinquième phase, qui intervient lorsque deux manœuvres sont distantes l'une de l'autre d'une distance ou d'une durée supérieure à un seuil prédéfini, est une phase de réassurance qui permet de montrer au conducteur que le module de traitement 25 est toujours actif (après une absence prolongée d'instruction de guidage).

Une instruction de guidage pourra alors être élaborée lors de chacune de ces cinq phases.

La génération de ces instructions de guidage est réalisée de manière séquentielle, en plusieurs étapes successives qui consistent globalement à détecter des objets statiques et mobiles visibles sur les images, à identifier les routes et l'itinéraire sur chaque image acquise, à positionner les objets détectés sur une carte issue de la base de données cartographique 20, à associer les objets statiques détectés aux objets statiques connus de la base de données cartographique 20, et à appliquer un raisonnement statistique et/ou de continuité sur les objets pour élaborer l'instruction de guidage vocale.

Dans le présent exposé, on pourra tout d'abord décrire en détail comment les instructions de guidage sont élaborées. Dans une seconde partie, on précisera comment ces instructions de guidage peuvent être renforcées par l'utilisation des objets de l'environnement détectés sur les images acquises. Enfin, dans une troisième partie, on indiquera comment ces instructions sont précisément générées selon la phase dans laquelle se trouve le véhicule (anticipation, description, accompagnement...).

### Etape S3 : détection des objets

L'étape de détection d'objets mobiles et statiques sur l'image acquise par la caméra 10 et des attributs caractérisant chacun de ces objets est réalisée par le module de traitement 25, en utilisant des technologies existantes d'intelligence artificielle par apprentissage.

On notera qu'un objet sera ici défini comme un élément de l'environnement qui est potentiellement ou effectivement visible par le conducteur du véhicule.

La liste des attributs dépend du type d'objet détecté.

Ainsi, à titre d'exemple illustratif, si l'objet est du type « véhicule motorisé à 4 roues », les attributs sont les suivants :
- catégorie (voiture, camionnette, fourgon, camion, bus...),
- couleur principale de la carrosserie,
- sens de circulation,
- face vue par le conducteur (avant, arrière, latérale gauche, latérale droite),
- état (stationné, à l'arrêt, en marche),
- orientation de l'objet par rapport au véhicule,
- pourcentage de visibilité.

L'objet détecté ainsi que chaque attribut dispose d'un indice de confiance exprimé en pourcentage. Plus la valeur de cet indice de confiance est proche de 100%, plus l'objet et l'attribut peuvent être utilisés. En deçà d'un seuil prédéterminé, l'attribut ou l'objet n'est plus pris en compte. Plus les attributs d'un même objet sont nombreux, plus cet objet pourra être reconnu à chaque pas d'analyse de la scène (c'est-à-dire sur chaque image traitée).

### Etape S4 : positionnement des objets

Pour identifier l'objet ou les objets à utiliser dans la formulation des instructions de guidage vocales, le module de traitement 25 fait correspondre les objets détectés sur l'image traitée avec les données stockées dans la base de données cartographiques 20, ce qui permet de comprendre la relation de chaque objet par rapport à l'environnement et à la perception du conducteur.

Pour cela, le module de traitement 25 utilise les données stockées dans la base de données cartographiques 20, et notamment les objets qui y sont référencés (point d'intérêt, panneau de signalisation, feu tricolore, arrêt de bus...) et leurs descriptions (nom, type, couleur...).

Puis, le module de traitement 25 identifie les routes et l'itinéraire sur l'image traitée.

Ensuite, le module de traitement 25 positionne chaque objet détecté sur la carte en faisant correspondre les objets référencés avec les objets détectés. Il positionne également sur la carte les objets détectés et non référencés (véhicule, piéton...).

### Etape S6 : classification

A ce stade, le module de traitement 25 classifie tous les objets détectés.

Une première technique de classification consiste à utiliser les technologies existantes d'intelligence artificielle par apprentissage.

Cette technique peut consister à entraîner l'intelligence artificielle à identifier d'elle-même au moins dix objets détectés, en se focalisant sur la zone droite de l'image si le véhicule doit tourner à droite, sur la zone centrale s'il doit continuer tout droit, et sur la zone gauche s'il doit tourner à gauche, puis à classer ces dix objets par ordre d'importance.

Une deuxième technique de classification consiste en un calcul statistique afin d'attribuer un poids à chaque objet détecté.

Ce poids peut être calculé en fonction de critères issus de la liste suivante :
- la persistance de l'objet dans la scène, image après image (plus l'objet est visible longtemps, plus son poids augmente, si la présence de l'objet alterne entre visible puis non visible, le poids baisse),
- la surface occupée par l'objet dans la scène et son pourcentage de visibilité (un camion est plus visible qu'une voiture),
- la saillance de l'objet (plus sa couleur se distingue du reste de l'environnement, plus son poids est élevé ; par exemple, un véhicule de couleur rouge est plus visible qu'un véhicule gris),
- l'unicité de l'objet (l'usage d'un véhicule de couleur bleue unique est moins ambiguë que l'usage d'un véhicule de couleur rouge parmi d'autres véhicules rouges ou orangés),
- la position de l'objet par rapport à la manœuvre à réaliser (plus il en est proche, plus son poids est élevé),
- la phase dans laquelle se trouve le véhicule (comme cela sera bien détaillé plus loin dans cet exposé, en fonction de la phase, des classes d'objets sont plus propices au guidage que d'autres),

Une troisième technique est relative à une stratégie de continuité d'indices visuels le long d'un trajet.

Un objet est classé prioritaire pour être utilisé lors de l'élaboration de l'instruction de l'étape S7 ci-après décrite, si un attribut de l'objet a été identifié par le module de traitement 25 comme étant un attribut commun à plusieurs objets ou un indice déjà utilisé lors de l'élaboration d'une précédente instruction de guidage précédente du trajet en cours et/ou potentiellement utilisable pour l'élaboration d'une instruction de guidage ultérieure sur ce même trajet.

Avantageusement, l'attribut commun a été identifié par le module de traitement 25 lors de la détermination du trajet S1.

Par exemple, lors de la détermination du trajet S1, le module de traitement 25 identifie plusieurs panneaux routiers sur lequel le nom « Versailles » est inscrit. L'attribut commun identifié est le nom « Versailles » qui y est inscrit. Lors de l'étape S2 d'acquisition vidéo, la caméra 10 acquiert une image comprenant un panneau. Lors de l'étape de détection des objets S3, le module de traitement 25 identifie sur l'image le panneau et détecte qu'il est caractérisé par l'attribut commun précédemment identifié. La détection de l'attribut peut être réalisée par déchiffrage dans l'image du nom inscrit sur le panneau ou par correspondance via la géolocalisation, avec un panneau répertorié dans base de données cartographiques 20, ledit panneau étant associé à des attributs également répertoriés dans base de données cartographiques 20. Lors de l'étape S5 de classification, le module de traitement 25 classe ledit panneau comme prioritaire afin qu'il soit utilisé pour l'élaboration de la prochaine de guidage à l'étape S7.

Ainsi, si sur le trajet, on retrouve à plusieurs intersections consécutives un panneau dont l'inscription comprend le même nom, les instructions de guidage relatives à ces intersections privilégieront l'utilisation d'un même indice visuel, assurant une continuité des indices visuels garantissant une cohérence et facilitant le guidage de l'utilisateur tout en diminuant sa charge cognitive.

Par exemple, sur un trajet comprenant un premier rond-point suivi d'une intersection et d'une route sur laquelle il faut rester sur la voie principale, on a la succession d'instructions de guidage suivantes : « Au rond-point, prenez à droite en direction de Versailles », « Continuez tout droit en direction du panneau Versailles », « Restez sur votre voie toujours en direction de Versailles ».

### Etape S7 : élaboration de l'instruction

L'instruction de guidage est alors élaborée en utilisant éventuellement un indice qui est adapté au contexte et à la manœuvre à effectuer et qui dépend des attributs de l'objet sélectionné.

Un objectif est de décrire à quel moment et dans quel contexte un objet doit être utilisé pour élaborer l'instruction de guidage vocale, de façon à aider au mieux le conducteur à s'orienter.

Le contexte dépend notamment de la complexité de la manœuvre à réaliser. Cette complexité est ici estimée en fonction d'au moins un des critères suivantes, et de préférence en fonction de chacun d'entre eux :
- la position du véhicule par rapport à la manœuvre (si un changement de voie est nécessaire, la situation est estimée plus complexe),
- la configuration de l'infrastructure routière (plus une intersection comprend de voies, plus elle est jugée complexe),
- le contexte de conduite ( tension du conducteur, c'est-à-dire stress ; trafic important...),
- la présence d'un nombre important d'objets dans le champ de vision du conducteur,
- la connaissance de l'infrastructure routière par le conducteur,
- la phase dans laquelle le véhicule se trouve, et
- le poids statistique des différents repères visuels détectés.

Ici, préférentiellement, on n'utilise dans l'instruction de guidage vocal un repère visuel que si cela s'avère nécessaire.

Si la situation est simple, c'est-à-dire si le niveau de complexité est inférieur à un premier seuil de complexité, on préférera ne pas en utiliser pour ne pas augmenter la charge cognitive du conducteur. Ainsi, on préférera énoncer « Tournez à gauche à cette intersection » plutôt que « Tournez à gauche derrière l'arrêt de bus », car cette dernière instruction demanderait au conducteur de repérer l'arrêt de bus et l'intersection plutôt que l'intersection seule.

En revanche, si le niveau de complexité est supérieur à ce premier seuil de complexité, les instructions sont élaborées en utilisant des indices (ou « repères ») temporels ou visuels, ce qui améliore la compréhension de la manœuvre à réaliser. On parle de « renforcement de l'instruction de guidage vocal ».

Ce renforcement peut être opéré de diverses manières, en fonction de différents paramètres.

Une première façon de renforcer une instruction de guidage vocale consiste à donner dans l'instruction une notion de temps pour faciliter la compréhension de l'action à réaliser. On peut illustrer cela par plusieurs exemples utilisant des indices contextuels.

Dans un premier exemple, si le trafic est intense ou si un objet empêche la manœuvre ou cache le but de la manœuvre, le module de traitement 25 est programmé pour intégrer un indice contextuel du type « dès que possible » au milieu de l'instruction de guidage, afin que le conducteur se sente libre de repositionner le véhicule au meilleur moment.

Dans un second exemple, si la réalisation de la manœuvre est possible et doit être immédiate, le module de traitement 25 est programmé pour intégrer un autre indice contextuel du type « maintenant » ou « tout de suite », de manière que le conducteur repositionne son véhicule sans attendre.

Dans un troisième exemple, si la réalisation de la manœuvre est possible sans nécessité d'être immédiate, le module de traitement 25 est programmé pour intégrer un indice contextuel du type « dès que possible », de manière que le conducteur se sente libre de repositionner son véhicule au meilleur moment.

Chaque instruction de guidage est alors structurée en accolant au moins une action, un indice contextuel et un attribut.

Dans le cas d'une instruction de guidage concaténée avec une autre instruction de guidage, le module de traitement 25 est programmé pour remplacer l'indice contextuel « dès que possible » par « ensuite » ou « après ».

Dans ce cas, l'instruction de guidage complète est structurée en accolant une action et un attribut égocentré, concaténé avec une action, un indice contextuel et un autre attribut.

Par exemple, cette instruction de guidage complète peut s'exprimer sous la forme « Tournez à droite puis, positionnez-vous ensuite à gauche », ou « Tournez à droite puis après positionnez-vous à gauche », ou « Tournez à droite puis suivez ensuite la direction de Versailles ».

Une seconde façon de renforcer une instruction de guidage vocale consiste à fournir un repère mobile pour faciliter la compréhension de l'action à réaliser. Cette façon est utilisée lorsque l'objet détecté sur l'image acquise qui présente le poids le plus important est un repère mobile.

On peut considérer que le module de traitement 25 est parvenu à :
- détecter les différents types de repères mobiles (voitures, camions, bus, camionnettes, vélo, moto),
- positionner les repères mobiles sur les voies de la carte issue de la base de données cartographiques 20,
- détecter les attributs de ces repères mobiles pour les différencier les uns des autres,
- identifier le repère mobile unique qui sera vu par le conducteur sans ambiguïté en le caractérisant au moins par son type, sa couleur, sa position, et
- identifier que le repère mobile unique est stable (c'est-à-dire qu'il apparaît sur les différentes images successivement traitées.

Dans ce cas, le module de traitement 25 est programmé pour utiliser ce repère mobile unique pour aider le conducteur à positionner correctement son véhicule.

L'instruction de guidage complète est alors structurée en accolant une action, un repère géographique, un indice visuel et un attribut.

Par exemple, cette instruction de guidage peut s'exprimer sous la forme « Positionnez-vous sur la même voie que la voiture rouge ».

Une troisième façon de renforcer une instruction de guidage vocale consiste à fournir un repère statique tel qu'une infrastructure routière pour faciliter la compréhension de l'action à réaliser. Cette façon est utilisée lorsque l'objet détecté sur l'image acquise qui présente le poids le plus important est un repère statique.

Pour cela, on peut considérer que le module de traitement 25 est parvenu à :
- détecter les différents types de repères statiques (ponts, feux de signalisation...),
- associer les repères statiques détectés avec les objets mémorisés dans la base de données cartographiques 20,
- détecter les attributs de ces repères statiques pour les différencier les uns des autres,
- identifier le repère statique unique qui sera vu par le conducteur sans ambiguïté en le caractérisant au moins par son type, sa couleur, sa position, et à
- identifier que le repère est stable.

Dans ce cas, le module de traitement 25 est programmé pour utiliser ce repère statique unique pour aider le conducteur à positionner correctement son véhicule.

L'instruction de guidage complète est alors structurée en accolant une action, une cible, un repère géographique et un indice visuel.

Par exemple, cette instruction de guidage complète peut s'exprimer sous la forme « Prenez la sortie juste après le pont ».

Une quatrième façon de renforcer une instruction de guidage vocale consiste à utiliser un panneau directionnel pour faciliter la compréhension de l'action à réaliser. Cette façon est utilisée lorsque l'objet détecté sur l'image acquise qui présente le poids le plus important est un panneau.

Pour cela, on peut considérer que le module de traitement 25 est parvenu à :
- détecter les différents types de panneaux avec leurs attributs (feux de signalisation, stop...),
- associer les panneaux détectés par rapport aux panneaux répertoriés dans la base de données cartographique 20 dans le but notamment de déterminer les attributs de chaque panneau (couleur, texte, direction indiquée...),
- déterminer ainsi les attributs de chaque panneau pour les différencier,
- identifier le panneau unique qui sera vu par le conducteur sans ambiguïté (grâce à sa couleur, le texte qui y est inscrit...),
- identifier que le panneau est stable (et notamment que le texte ou la forme affichée n'est pas modifiable à court terme).

Dans ce cas, le module de traitement 25 est programmé pour utiliser ce panneau unique avec ses attributs pour aider le conducteur à positionner correctement son véhicule.

L'instruction de guidage complète est alors structurée en accolant une action, un repère géographique, un attribut égocentré et une finalité.

Par exemple, cette instruction de guidage complète peut s'exprimer sous la forme « Positionnez-vous sur la voie de gauche en direction du panneau vert ».

Une cinquième façon de renforcer une instruction de guidage vocale consiste à utiliser un lieu significatif (restaurant, pharmacie...) pour faciliter la compréhension de l'action à réaliser. Cette façon est utilisée lorsque l'objet détecté sur l'image acquise qui présente le poids le plus important est un lieu significatif.

Pour cela, on peut considérer que le module de traitement 25 est parvenu à :
- détecter les différents types de repères statiques formant des lieux significatifs,
- associer les repères statiques détectés aux repères répertoriés dans la base de données cartographiques 20,
- détecter les attributs de ces repères pour les différencier les uns des autres,
- identifier le repère unique qui sera le mieux vu par le conducteur sans ambiguïté compte tenu de ses attributs (type de repère, couleur et position), et
- identifier que le repère est stable.

Dans ce cas, le module de traitement 25 est programmé pour utiliser ce lieu significatif avec ses attributs pour aider le conducteur à positionner correctement son véhicule.

L'instruction de guidage complète est alors structurée en accolant une action, un attribut égocentré, un repère géographique, et un indice visuel.

Par exemple, cette instruction de guidage peut s'exprimer sous la forme « Tournez à droite juste après le restaurant ».

Une sixième façon de renforcer une instruction de guidage vocale consiste à utiliser un lieu remarquable (bâtiment significatif connu dont la fonction ne changera pas dans les prochaines années, tel qu'un monument, une cathédrale...) pour faciliter la compréhension de l'action à réaliser. Cette façon est utilisée lorsque l'objet détecté sur l'image acquise qui présente le poids le plus important est un lieu remarquable.

Dans ce cas, le module de traitement 25 est programmé pour utiliser le nom de ce lieu remarquable, sans ajouter d'attribut, pour aider le conducteur à positionner correctement son véhicule.

L'instruction de guidage complète est alors structurée en accolant une action, un attribut égocentré, un repère géographique, et un indice visuel.

Par exemple, cette instruction de guidage complète peut s'exprimer sous la forme « Tournez à droite juste après la Tour Eiffel ».

Une septième façon de renforcer une instruction de guidage vocale consiste à utiliser deux lieux significatifs et/ou remarquables pour faciliter la compréhension de l'action à réaliser. Cette façon est utilisée lorsque l'objet détecté sur l'image acquise qui présente le poids le plus important est un lieu remarquable ou significatif, et que l'un des autres objets détectés est aussi un lieu remarquable ou significatif.

Pour cela, on peut considérer que le module de traitement 25 est parvenu à :
- détecter les différents types de repères statiques formant des lieux significatifs ou remarquables,
- associer les repères statiques détectés aux repères répertoriés dans la base de données cartographiques 20,
- détecter les attributs de ces repères pour les différencier les uns des autres,
- identifier que la cible de la manœuvre se trouve entre 2 repères statiques détectés qui seront vus par le conducteur sans ambiguïté,
- identifier que ces repère sont stables.

Dans ce cas, le module de traitement 25 est programmé pour utiliser ces lieux remarquables ou significatifs avec leurs attributs pour aider le conducteur à positionner correctement son véhicule.

L'instruction de guidage complète est alors structurée en accolant une action, un attribut égocentré, un repère géographique, un premier indice visuel et un second indice visuel.

Par exemple, cette instruction de guidage complète peut s'exprimer sous la forme « Tournez à droite entre l'église et la pharmacie ».

Une huitième façon de renforcer une instruction de guidage vocale consiste à utiliser les caractéristiques de la route pour faciliter la compréhension de l'action à réaliser.

Dans la base de données cartographiques 20, il est en effet stocké des informations sur les caractéristiques des axes routiers qui sont exploitables dans le cadre de la présente invention.

On peut alors considérer que le module de traitement 25 est parvenu à détecter un attribut différenciant l'axe routier à emprunter des autres axes routiers visibles par le conducteur.

Dans ce cas, le module de traitement 25 est programmé pour utiliser cet attribut pour aider le conducteur à positionner correctement son véhicule.

L'instruction de guidage complète est alors structurée en accolant une action, un attribut égocentré et une cible, voire également un attribut de la cible.

Par exemple, cette instruction de guidage complète peut s'exprimer sous la forme « Tourner à droite dans la ruelle » ou « Tourner à droite dans la petite rue » ou « Tourner à droite dans la rue pavée ».

Une neuvième façon de renforcer une instruction de guidage vocale est utilisée lorsqu'un renforcement de l'instruction de guidage était préconisé dans les phases d'anticipation ou de description mais qu'aucun repère visuel n'était alors disponible alors que, lors de la phase d'accompagnement, un repère visuel devient disponible.

Dans ce cas, le module de traitement 25 est programmé pour utiliser ce repère visuel afin de générer une instruction de guidage vocale renforcée au plus tôt.

Ce repère visuel peut être utilisé alors que le conducteur ne le voit pas encore (dans la phase de description ou même d'anticipation), ou dès qu'il le voit. On peut notamment envisager que le module de traitement 25 commande de répéter une instruction de guidage vocale en la complétant en utilisant cet indice visuel.

Une dixième façon de renforcer une instruction de guidage vocale est utilisée en fonction de la complexité de la manœuvre à réaliser et du niveau d'hésitation détecté.

Ainsi, lorsque la complexité de la manœuvre est jugée très élevée (supérieure à un second seuil de complexité prédéterminé) ou que le niveau d'hésitation du conducteur dépasse un seuil prédéterminé, il est prévu d'associer plusieurs types de renforcements.

Le niveau d'hésitation du conducteur peut être évalué de différentes manières connues par ailleurs, par exemple en fonction de la trajectoire empruntée (qui dévie de la trajectoire prévue), des oscillations du volant, de la façon de tenir le volant, de la position du conducteur...

Un premier exemple d'association consiste à employer dans l'instruction de guidage vocale un renforcement utilisant une notion de temps avec n'importe quel autre type de renforcement.

Un deuxième exemple d'association consiste à employer un renforcement utilisant un lieu significatif ou un lieu remarquable avec un renforcement utilisant les caractéristiques de la route à emprunter.

Dans cet exemple, l'instruction de guidage complète est alors structurée en accolant une action, un attribut égocentré, un repère géographique, un indice visuel, une cible et attribut de la cible. Cette instruction de guidage complète peut alors s'exprimer sous la forme « Tournez à droite juste après la Tour Eiffel dans la petite ruelle ».

Un troisième exemple d'association consiste à employer un renforcement qui utilise les panneaux directionnels avec un renforcement qui utilise un lieu significatif ou un lieu remarquable.

Un quatrième exemple d'association consiste à employer deux renforcements qui utilisent un lieu significatif ou un lieu remarquable.

Dans cet exemple, l'instruction de guidage complète est alors structurée en accolant une action, un attribut égocentré, un indice visuel, un repère géographique, un autre indice visuel. Cette instruction de guidage complète peut s'exprimer sous la forme « Tournez à droite après la Tour Eiffel entre l'église et la pharmacie ».

Un quatrième exemple d'association consiste à employer un renforcement qui utilise un repère mobile avec un renforcement qui utilise un repère fixe ou une infrastructure routière.

Dans cet exemple, l'instruction de guidage complète est alors structurée en accolant une action, un attribut égocentré, un premier indice visuel, un autre indice visuel et un attribut de l'indice. Cette instruction de guidage complète peut s'exprimer sous la forme « Tournez à gauche après le feu comme la voiture rouge ».

Il a été enseigné supra que dans une situation peu complexe, l'instruction de guidage vocale n'est pas renforcée.

Il a également été enseigné que le niveau de complexité d'une manœuvre dépendait de plusieurs variables.

De préférence, on pourra prévoir que le niveau de complexité est fonction également d'un autre paramètre qui est le coût que provoquerait, en termes de temps ou de distance, une erreur du conducteur (s'il prenait une mauvaise sortie).

Ainsi, lorsque le module de traitement 25 prévoit que si une erreur était commise par le conducteur pendant la manœuvre, cette erreur ajouterait beaucoup de temps à l'itinéraire restant à parcourir, il est programmé pour augmenter la valeur du niveau de complexité, ce qui entraîne le renforcement de l'instruction de guidage vocale.

On comprend donc que dans ce cas de figure, il est aussi prévu de recourir plus fréquemment, voire systématiquement, à la combinaison de plusieurs renforcements, comme cela a été détaillé ci-dessus.

Le module de traitement 25 doit en effet garantir au conducteur la réussite de la manœuvre si la non-réalisation de cette manœuvre avait un impact significatif sur le temps d'arrivé estimé à destination. Cette situation se présente notamment sur autoroutes, ou sur les routes dans lesquelles les entrées et sorties sont peu fréquentes, ou sur les routes à sens unique.

En pratique, le module de traitement 25 est programmé pour calculer le temps (ou la distance) supplémentaire nécessaire pour arriver à destination si le conducteur se trompait de voie lors de la manœuvre à effectuer. Au-delà d'un seuil prédéterminé (exprimé en termes de temps ou de distance ou de pourcentage de temps restant avant arrivée à destination), le module de traitement 25 générera alors une instruction de guidage vocale davantage renforcée que si le temps calculé était inférieur à ce seuil.

De préférence, le module de traitement 25 peut en outre utiliser une intonation plus ferme qu'habituellement pour énoncer l'instruction de guidage vocale afin que le conducteur comprenne l'importance de réaliser la bonne manœuvre.

Le coût d'une non-réalisation de la manœuvre (et donc le choix de générer une instruction de guidage vocale davantage renforcée) peut être calculé en fonction également d'autres paramètres (type de trajet, type de voie...) et peut être augmenté dans des cas bien identifiés, par exemple dans les cas où :
- le véhicule n'est pas correctement positionné pour réaliser la manœuvre,
- le véhicule est correctement positionné par rapport à la manœuvre à réaliser mais que les clignotants ne sont pas activés,
- le conducteur n'a pas appliqué la consigne avant la fin de la phase d'anticipation ou avant la fin de la phase de description.

Dans ces cas, le module de traitement 25 pourra être programmé pour répéter l'instruction de guidage vocale en y ajoutant une formulation insistante telle que « Positionnez-vous maintenant sur la voie » ou en ajoutant un autre renforcement permettant d'insister sur la manœuvre à réaliser tel que « Maintenant, positionnez-vous sur la voie de ... en direction de... ».

Lorsque le véhicule avance, le contexte pourra changer, rendant une instruction de guidage au mieux ambigüe, au pire caduque.

On peut ainsi envisager deux cas.

Le premier cas est celui où un élément s'intercale entre le véhicule et l'objet qui a été sélectionné pour élaborer une instruction de guidage, empêchant le conducteur de visualiser cet objet.

Le second cas est celui où un autre objet, homologue de celui qui a été sélectionné pour élaborer une instruction de guidage, apparaît dans le champ de vision du conducteur. Cette situation peut par exemple intervenir lorsqu'un bus quitte son emplacement et découvre un deuxième arrêt de bus.

Ces deux situations impliquent une augmentation du stress et de la charge cognitive du conducteur, ainsi qu'un risque d'erreur ou de manœuvre réalisée tardivement.

Dans ces deux cas, le module de traitement 25 sera alors programmé pour générer une nouvelle instruction adaptée au nouveau contexte.

Comme cela a été introduit supra, l'instruction de guidage vocale à énoncer ne sera pas la même selon la phase dans laquelle se trouve le véhicule. On peut alors maintenant décrire comme cette instruction de guidage sera formulée, dans chacune de ces phases.

### Phase d'anticipation

Pour rappel, la phase d'anticipation intervient en amont de la manœuvre à réaliser. Elle débute et finit à distance de la zone où la manœuvre sera réalisée. Elle permet au conducteur de positionner le véhicule au mieux et/ou de se préparer à effectuer cette manœuvre (notamment lorsque la cible de la manœuvre sera visible tardivement).

Dans une telle phase d'anticipation, le renforcement des instructions de guidage vocale est préconisé, mais l'usage de lieux remarquables ou significatif est évité.

Le module de traitement 25 est programmé pour énoncer une instruction de guidage vocale dite d'anticipation lorsque le tronçon de route emprunté contient plusieurs voies.

La façon de renforcer cette instruction de guidage d'anticipation pourra varier selon la situation rencontrée.

De façon basique (c'est-à-dire dans les situations autres que celles envisagées ci-dessous), le renforcement est réalisé de la manière suivante.

Si le véhicule est situé sur un axe routier à plusieurs voies et qu'il est positionné dans la voie la plus compatible avec la réalisation de la prochaine manœuvre, le module de traitement 25 est programmé pour générer une instruction de guidage vocale d'anticipation rassurant le conducteur.

L'instruction de guidage vocale est alors structurée en accolant une action, un critère de familiarité, un repère géographique et un attribut égocentré.

Par exemple, cette instruction de guidage vocale peut s'exprimer sous la forme « Restez bien sur votre voie ».

Si le véhicule est situé sur une route à plusieurs voies et qu'il est positionné dans une voie qui est compatible avec la réalisation de la prochaine manœuvre (typiquement, si aucune ligne blanche continue ne se trouve entre la voie sur laquelle il se trouve et le lieu de la prochaine manœuvre) mais qui nécessite un changement de voie, le module de traitement 25 est programmé pour générer une instruction de guidage vocale d'anticipation enjoignant le conducteur à changer de voie rapidement.

L'instruction de guidage vocale est alors structurée en accolant une action, un repère géographique et un indice contextuel.

Par exemple, cette instruction de guidage vocale peut s'exprimer sous la forme « Positionnez-vous maintenant (ou dès que possible) sur la voie x ».

Si le véhicule doit s'insérer dans une route à plusieurs voies et que le véhicule se trouve sur une voie d'insertion de longueur limitée, le module de traitement 25 est programmé pour générer une instruction de guidage vocale d'anticipation enjoignant le conducteur à changer de voie.

L'instruction de guidage vocale est alors structurée en accolant au moins une action et un repère géographique.

Par exemple, cette instruction de guidage vocale peut s'exprimer sous la forme « Insérez-vous sur la voie ».

Si le véhicule doit s'insérer dans une route à plusieurs voies et que le véhicule se trouve sur une voie d'insertion de longueur illimitée (qui se transforme alors en voie de l'axe routier) et que cette voie est la plus compatible pour effectuer la prochaine manœuvre, le module de traitement 25 est programmé pour générer une instruction de guidage vocale d'anticipation enjoignant le conducteur à rester sur cette voie.

L'instruction de guidage vocale est alors structurée en accolant au moins une action, un repère géographique et attribut égocentré.

Par exemple, cette instruction de guidage peut s'exprimer sous la forme « Restez sur votre voie ».

Si le véhicule doit s'insérer dans une route à plusieurs voies et que le véhicule se trouve sur une voie d'insertion de longueur illimitée et que cette voie n'est pas la plus compatible avec la prochaine manœuvre à effectuer, le module de traitement 25 est programmé pour compter le nombre de changement de voies nécessaire pour atteindre la voie la plus compatible, puis pour générer une instruction de guidage vocale d'anticipation enjoignant le conducteur à changer de voie.

L'instruction de guidage vocale est alors structurée en accolant au moins une action et attribut.

Par exemple, cette instruction de guidage vocale peut s'exprimer sous la forme « Positionnez-vous sur la nième voie ».

Dans cette situation, la manière de formuler sur quelle voie le véhicule doit se placer peut être déterminée de la façon suivante.

En l'absence de contrainte sur la voie à emprunter parmi les plusieurs voies de l'axe routier, le module de traitement 25 est programmé pour générer une instruction de guidage vocale enjoignant le conducteur à s'insérer.

L'instruction de guidage complète est alors structurée en accolant au moins une action et une cible.

Par exemple, cette instruction de guidage peut s'exprimer sous la forme « Insérez-vous sur... ». Le nom ou le type de route peut ensuite être spécifié.

Si l'axe routier comporte deux voies de circulation uniquement, le module de traitement 25 est programmé pour générer une instruction de guidage vocale indiquant si le véhicule doit se placer sur la voie « de droite » ou « de gauche ».

L'instruction de guidage est alors structurée en accolant au moins une action, un repère géographique et un attribut égocentré.

Si l'axe routier comporte exactement trois voies de circulation, le module de traitement 25 est programmé pour générer une instruction de guidage vocale indiquant si le véhicule doit se placer sur la voie « de droite » ou « de gauche » ou « du milieu ».

L'instruction de guidage est alors structurée en accolant au moins une action, un repère géographique et un attribut égocentré.

Si l'axe routier comporte exactement quatre voies de circulation et que seule une d'entre elles est compatible avec la manœuvre à réaliser, le module de traitement 25 est programmé pour générer une instruction de guidage vocale indiquant si le véhicule doit se placer sur la voie « la plus à droite » ou « la plus à gauche » ou « la deuxième voie » ou « la troisième voie ».

L'instruction de guidage est alors structurée en accolant au moins une action, un repère géographique et un attribut exo-centré.

Si l'axe routier comporte exactement quatre voies de circulation et que plusieurs d'entre elles sont compatibles avec la manœuvre à réaliser, le module de traitement 25 est programmé pour générer une instruction de guidage vocale indiquant si le véhicule doit se placer sur les voies « les plus à droite » ou « les plus à gauche » ou « du milieu ».

L'instruction de guidage est alors structurée en accolant au moins une action, un repère géographique et un attribut exo-centré.

Si l'axe routier comporte un nombre impair de voies de circulation supérieur à quatre et que seule celle du milieu est compatible avec la manœuvre à réaliser, le module de traitement 25 est programmé pour générer une instruction de guidage vocale indiquant que le véhicule doit se placer sur la voie « du milieu ».

L'instruction de guidage est alors structurée en accolant au moins une action, un repère géographique et un attribut exo-centré.

Si l'axe routier est composé de plusieurs voies et qu'au moins une d'entre elles est interdite à la circulation du véhicule, le module de traitement doit l'intégrer dans le comptage des voies.

Lorsque le véhicule se trouve hors d'une agglomération, le renforcement de l'instruction de guidage vocale dans la phase d'anticipation peut préférentiellement indiquer au conducteur la raison du positionnement (la finalité) en décrivant la prochaine manœuvre à effectuer.

La finalité est ainsi indiquée en fonction de la distance entre le véhicule et la manœuvre, en fonction du type de manœuvre à effectuer (sortie d'autoroute, bretelle, rond-point...) et des infrastructures routières visibles pour le conducteur (panneaux de direction...).

Sur les axes routiers, le module de traitement 25 doit utiliser un repère visuel qui est de préférence statique (du type panneaux de direction), sinon (en l'absence de tel panneau) un repère mobile, sinon (en l'absence de panneau et de repère mobile) un élément d'infrastructure routière.

On peut alors préciser cette règle par les exemples suivants.

Si le module de traitement 25 détecte un panneau et qu'il a la capacité de lire les inscriptions qui y sont marquées, il est programmé pour générer une instruction de guidage vocale d'anticipation enjoignant le conducteur à suivre la direction qui y est indiquée.

L'instruction de guidage complète est alors structurée en accolant au moins une action, un repère géographique, un attribut égocentré, une finalité, un repère géographique, un indice visuel et un attribut.

Par exemple, cette instruction de guidage vocale peut s'exprimer sous la forme « Positionnez-vous sur la voie de gauche pour prendre la sortie en direction de... ».

Si le module de traitement 25 détecte un panneau, qu'il n'a pas la capacité de lire les inscriptions qui y sont marquée mais que la base de données cartographiques 20 dispose de cette information, il opère de la même façon que précité.

Si le module de traitement 25 détecte un panneau dont la couleur est unique parmi les autres panneaux, il est programmé pour générer une instruction de guidage vocale enjoignant le conducteur à suivre la direction du panneau de la couleur identifiée.

L'instruction de guidage vocale est alors structurée en accolant au moins une action, un repère géographique, un attribut égocentré, une finalité et un attribut.

Par exemple, cette instruction de guidage peut s'exprimer sous la forme « Positionnez-vous sur la voie de gauche pour suivre le panneau bleu ». Si l'inscription notée sur le panneau est lisible ou connue, cette instruction peut être complétée en indiquant la direction qui y est indiquée.

Lorsque le véhicule se trouve dans une agglomération, les panneaux sont plus fréquemment cachés ou recouvert par de la végétation. Par conséquent, le module de traitement 25 doit identifier l'indice visuel le plus pertinent parmi d'autres repères, dont :
- les repères mobiles,
- les éléments de l'infrastructure routière,
- les repères statiques autres que des panneaux, et
- les lieux significatifs ou remarquables.

On peut illustrer cette situation par les quatre exemples suivants.

Dans un premier exemple, le module de traitement 25 élabore l'instruction de guidage suivante : « Positionnez-vous sur la même voie que la voiture rouge ». Dans cet exemple, l'instruction de guidage est structurée en accolant au moins une action, un repère géographique, un indice visuel et un attribut.

Dans un deuxième exemple, le module de traitement 25 élabore l'instruction de guidage suivante : « Positionnez-vous sur la voie de gauche en direction du panneau vert ». Dans cet exemple, l'instruction de guidage est structurée en accolant au moins une action, un repère géographique, un attribut égocentré, un repère géographique, un indice visuel et un attribut.

Dans un troisième exemple, le module de traitement 25 élabore l'instruction de guidage suivante : « Positionnez-vous sur la voie de gauche puis au rond-point prenez la 3^{ème} sortie ». Dans cet exemple, l'instruction de guidage est structurée en accolant au moins une action, un repère géographique, un indice visuel, un élément de concaténation, un autre indice visuel, une action et un attribut exo-centré.

Dans un quatrième exemple, le module de traitement 25 élabore l'instruction de guidage suivante : « Positionnez-vous sur la voie de droite pour tourner à droite au carrefour ». Dans cet exemple, l'instruction de guidage est structurée en accolant au moins une action, un repère géographique, un indice visuel, une finalité et un autre indice visuel.

### Phase de description de la manœuvre

La deuxième phase est la phase de description. Au cours de cette deuxième phase, l'instruction de guidage vocale dite de description caractérise l'action qui va devoir être réalisée pour atteindre la cible.

Dans cette instruction, le module de traitement 25 délivre une ou des informations nécessaires au conducteur pour se repérer et pour repérer la cible par rapport à l'environnement (et notamment par rapport aux repères visuels détectés).

Lorsque le véhicule arrive sur une intersection, le module de traitement 25 calcule l'angle de chaque route partant de l'intersection, par rapport à la route empruntée par le véhicule. Cet angle s'exprime par exemple en degrés et est compris entre -180° et 180°.

L'instruction de guidage peut alors être renforcée par un attribut géographique adapté à l'intersection qui peut être « complètement à droite » ou « en face » (ou « tout droit »).

La façon de renforcer l'instruction de guidage peut varier en fonction du type d'intersection.

Dans une intersection en T, dans le cas où le véhicule arrive par le pied du T sur une route formant la traverse du T, le module de traitement 25 pourra être programmé pour employer le mot "intersection".

Si l'angle entre la base et la traverse du T est sensiblement perpendiculaire (par exemple à 10, 20 ou 30 degrés près), le module de traitement 25 emploiera les verbes d'action « Tournez à » ou « Prenez à ».

Si l'angle entre la base et la traverse du T n'est pas sensiblement perpendiculaire, deux cas doivent être envisagés.

Le premier cas est celui où le véhicule, dans l'intersection, doit dévier d'un angle sensiblement inférieur à 90 degrés par rapport à sa trajectoire initiale. Dans ce cas, le module de traitement 25 complètera les verbes utilisés par l'expression « légèrement à ». Il privilégiera en outre l'utilisation du verbe d'action « Prenez à » au verbe « Tournez à ».

Le second cas est celui où le véhicule, dans l'intersection, doit dévier d'un angle sensiblement supérieur à 90 degrés par rapport à sa trajectoire initiale. Dans ce cas, le module de traitement 25 complètera les verbes utilisés par l'expression « complètement à ». Il privilégiera en outre l'utilisation du verbe d'action « Tournez à » au verbe « Prenez à ».

Une intersection de type « fourche » est une intersection composée d'une voie d'entrée et d'exactement deux voies de sortie situées dans le prolongement de la voie d'entrée.

La façon de formuler une instruction de guidage vocale dans une telle intersection va alors dépendre de la configuration des lieux.

Dans le cas où les deux voies de sortie se trouvent à droite de la voie d'entrée, si le véhicule doit emprunter la voie la plus à droite, l'instruction sera formulée par une expression du type « Prenez la voie la plus à droite ». En revanche, si le véhicule doit emprunter l'autre voie de sortie, il sera nécessaire de renforcer l'instruction de guidage pour indiquer au conducteur laquelle il doit prendre.

A l'inverse, dans le cas où les deux voies de sortie se trouvent à gauche de la voie d'entrée, si le véhicule doit emprunter la voie la plus à gauche, l'instruction sera formulée par une expression du type « Prenez la voie la plus à gauche ». En revanche, si le véhicule doit emprunter l'autre voie de sortie, il sera nécessaire de renforcer l'instruction de guidage pour indiquer au conducteur laquelle il doit prendre.

Dans le cas où les deux voies de sortie se trouvent de part et d'autre de la voie d'entrée, l'instruction sera formulée par une expression du type « Prenez la voie à gauche » ou « Prenez la voie à droite ».

Dans une intersection de type rond-point, l'instruction de guidage vocale sera définie en fonction notamment du nombre de sorties du rond-point.

Un rond-point comporte une route annulaire et des routes débouchant dans cette route centrale, ci-après appelées « routes adjacentes ». Il présente des entrées et des sorties, une entrée et une sortie pouvant être situées sur une même route adjacente.

On notera que la complexité d'un rond-point dépendra des critères suivants :
- angle entre l'axe d'arrivée du véhicule et l'axe de sortie,
- angle entre la sortie à prendre et celles à proximité,
- nombre de routes adjacentes,
- différence entre le nombre d'entrée et le nombre de sorties,
- nombre de voies dans la route annulaire,
- diamètre extérieur du rond-point.

Un rond-point sera qualifié de simple s'il comporte autant d'entrées que de sorties réparties par paire sur des routes adjacentes, si le nombre de routes adjacentes est inférieur ou égal à quatre, si ces roues adjacentes sont orientées dans des directions bien distinctes, et si la priorité dans le rond-point est donnée aux véhicules qui roulent sur la route annulaire. Dans les autres cas, le rond-point sera qualifié de complexe.

Un premier exemple de rond-point simple sera un rond-point dont les routes adjacentes sont au nombre de quatre, écartées angulairement d'environ 90 degrés. On parle de « rond-point orthogonal ». Dans cet exemple, le module de traitement 25 pourra être programmé pour énoncer une instruction de guidage vocale du type « Au rond-point, sortez à droite (ou à gauche ou en face) ».

Un deuxième exemple de rond-point simple sera un rond-point dont les routes adjacentes sont au nombre de trois ou quatre, écartées angulairement deux à deux d'angles dont l'un au moins est sensiblement distinct de 90 degrés. Dans cet exemple, le module de traitement 25 pourra être programmé pour énoncer une instruction de guidage vocale renforcée par le numéro de la voie de sortie à prendre. Cette instruction pourra s'exprimer sous la forme « Au rond-point, prenez la première sortie à droite ».

Un troisième exemple de rond-point simple sera un rond-point de faible diamètre. Dans cet exemple, le module de traitement 25 interprètera ce rond-point comme un simple carrefour (voir ci-dessous).

Une instruction de guidage vocale de manœuvre permettant de traverser un rond-point complexe sera toujours renforcée.

On pourra donner différents exemples dans lesquels les instructions seront renforcées.

Dans un premier exemple, le rond-point ne comporte pas quatre sorties orthogonales deux à deux.

Alors, un premier cas à envisager est celui dans lequel la sortie est orthogonale (à 10 degrés près) à la voie d'entrée par laquelle arrive le véhicule et correspond à la première ou à la seconde sortie. Dans cette éventualité, le module de traitement 25 est programmé pour préférentiellement énoncer une instruction de guidage vocale renforcée par le numéro de la sortie à prendre. Cette instruction pourra s'exprimer sous la forme « Au rond-point, prenez la première sortie à droite ».

Un deuxième cas à envisager est celui dans lequel la sortie n'est pas orthogonale à la voie d'entrée par laquelle arrive le véhicule et correspond à la première ou à la seconde sortie. Dans cette éventualité, le module de traitement 25 est programmé pour obligatoirement énoncer une instruction de guidage vocale renforcée par le numéro de la sortie à prendre. Cette instruction pourra s'exprimer sous la forme « Au rond-point, prenez la première sortie à droite ».

Un troisième cas à envisager est celui dans lequel la sortie correspond à la troisième sortie ou à une sortie ultérieure. Dans cette éventualité, le module de traitement 25 est programmé pour énoncer une instruction de guidage vocale renforcée par un attribut exocentré. Cette instruction pourra s'exprimer sous la forme « Prenez la sortie à gauche juste avant le restaurant ».

Un deuxième exemple de rond-point complexe est celui dans lequel les nombres d'entrées et de sorties diffèrent.

On peut notamment envisager le cas dans lequel il existe une entrée de plus que sorties, cette entrée étant située sur une route adjacente en sens unique distincte de la voie par laquelle arrive le véhicule.

Dans cet exemple, le module de traitement 25 applique les règles définies dans l'exemple précédent, en s'interdisant parfois d'indiquer la sortie à prendre par son numéro.

Alors, si la sortie à prendre se trouve après l'entrée en sens unique, le module de traitement 25 est programmé pour énoncer une instruction de guidage vocale renforcée par un attribut exocentré, sans indiquer de numéro de sortie. Cette instruction pourra s'exprimer sous la forme «Prenez la sortie à droite au niveau de... ».

En revanche, si la sortie à prendre se trouve avant l'entrée en sens unique, le module de traitement 25 est programmé pour énoncer une instruction de guidage vocale de la même manière que dans le premier exemple de rond-point complexe donné ci-dessus.

Un troisième exemple de rond-point complexe est celui dans lequel les sorties sont très proches en distance ou en angle les unes des autres. En particulier, un rond-point est considéré comme complexe lorsque l'angle entre deux sorties est inférieur ou égal à 30°.

Dans cet exemple, le module de traitement 25 applique les mêmes règles que celles énoncées dans le premier exemple de rond-point complexe donné ci-dessus, en renforçant obligatoirement les instructions de guidage vocales.

Un quatrième exemple de rond-point complexe est celui dans lequel les véhicules arrivant dans le rond-point ont priorité sur ceux circulant déjà autour du rond-point (on parle de « rond-point à la française », celui de la Place de l'Etoile étant le plus connu).

Dans cet exemple, le module de traitement 25 applique les mêmes règles que celles énoncées dans le premier exemple de rond-point complexe donné ci-dessus, en renforçant obligatoirement les instructions de guidage vocales par un avertissement tel que : « Attention aux priorités à droite dans le rond-point ».

Dans une intersection de type carrefour, avec au moins quatre voies qui partent de cette intersection, le module de traitement 25 applique les mêmes règles que celles énoncées dans les différents exemples de rond-point donnés ci-dessus, en remplaçant le terme « rond-point » par « carrefour » ou « intersection ».

Le module de traitement 25 peut notamment réaliser un comptage des sorties à partir de la voie empruntée par le véhicule, en comptant cette fois toutes les voies, même celles en sens unique ou en sens interdit.

Si la voie de sortie à emprunter est décalée par rapport aux autres voies de sortie, le module de traitement 25 est programmé pour ajouter dans l'instruction une commande du type « Avancez dans le carrefour pour prendre la 2ème sortie à gauche en direction de... ».

### Phase d'accompagnement dans la manœuvre

La phase d'accompagnement est essentiellement prévue pour indiquer au conducteur le moment exact auquel il peut débuter la manœuvre proprement dite, c'est-à-dire le changement de direction. Lors de cette phase, le module de traitement 25 n'émet une instruction de guidage vocale dite d'accompagnement que si la traversée l'intersection est jugée complexe.

Dans cette situation, le choix de renforcer ou non l'instruction de guidage vocale et la manière de la renforcer se font selon le type d'intersection.

Ainsi, lorsque plusieurs intersections en T se succèdent sur la route et qu'aucun repère visuel (infrastructure, panneau, lieu remarquable...) n'est présent sur le site pour les différencier, le module de traitement 25 sera programmé pour énoncer une instruction de guidage vocale d'accompagnement. Cette instruction comportera un indice contextuel et pourra se formuler de la manière suivante : « Tournez maintenant à droite... ».

Dans une intersection de type fourche, aucune instruction de guidage vocale d'accompagnement ne sera émise.

Dans une intersection de type rond-point, si le diamètre du rond-point est inférieur à une seuil prédéterminé et que les sorties ne sont pas orthogonales deux à deux, le module de traitement 25 sera programmé pour générer une instruction de guidage vocale d'accompagnement pendant la manœuvre soit en répétant une instruction déjà émise pendant la phase de description de la manœuvre, soit en utilisant un nouveau lieu distinctif ou remarquable ou une infrastructure routière qui n'était pas visible jusqu'alors. Le lieu distinctif ou remarquable ou l'infrastructure routière utilisé devra bien entendu être visible, unique et repérable immédiatement par le conducteur.

Cette instruction pourra se formuler ainsi : « Sortez maintenant du rond-point, juste avant l'hôtel X ».

Si le module de traitement 25 détecte que le conducteur a réalisé un tour complet du rond-point, il peut être programmé pour générer une instruction de guidage vocale d'accompagnement en répétant l'instruction de guidage vocale émise pendant la phase de description.

Si l'instruction de guidage vocale émise pendant la phase de description ne faisait référence à aucun repère visuel car aucun repère n'était alors bien visible et que le véhicule ralentit fortement (soit par hésitation du conducteur, soit du fait d'un bouchon), le module de traitement 25 est programmé pour générer une instruction de guidage vocale d'accompagnement en utilisant un lieu distinctif ou remarquable ou une infrastructure routière devenu visible.

Le ralentissement doit ici être supérieur à un seuil prédéterminé.

### Phase de Réassurance

Une fois la manœuvre effectuée, le module de traitement 25 évalue, en fonction de la complexité de la manœuvre et des hésitations éventuelles du conducteur, le besoin de conforter le conducteur sur la qualité de la manœuvre qu'il vient d'effectuer.

Pour cela, si le module de traitement 25 détecte une hésitation pendant la manœuvre ou en sortie de manœuvre, il est programmé pour générer une instruction de guidage vocale de renforcement. La décision de générer cette instruction peut également dépendre d'autres facteurs tels que la complexité de la manœuvre effectuée, la présence immédiate d'une autre manœuvre à effectuer...

Cette instruction est de préférence renforcée avec un indice visuel situé à proximité de la fin de la manœuvre ou visible seulement lorsque la manœuvre est achevée, cet indice étant de préférence distinct des indices visuels utilisés jusqu'alors.

### Phase de Continuité

En l'absence de manœuvre à effectuer sur une distance ou une durée supérieure à un seuil (par exemple plus d'une minute ou plus d'un kilomètre), il est préférable que le module de traitement 25 exprime au conducteur qu'il est toujours actif.

L'instruction de guidage vocale peut alors être formulée de façon différente selon la configuration de l'axe routier emprunté et selon l'environnement visible par le conducteur.

On peut ainsi envisager le cas où au moins une intersection est détectée entre la position du véhicule et la prochaine manœuvre à effectuer, où aucun changement de route n'est prévu, et où aucun changement de voie n'est possible. Dans cette situation, le module de traitement 25 est programmé pour générer une instruction de guidage vocale qui dépend de la courbure de la route.

Ainsi, si le rayon de courbure de la route est supérieur à un seuil prédéterminé, l'instruction de guidage vocale est structurée en apposant au moins une action, un repère géographique, un attribut égocentré, une finalité et un repère géographique. Elle peut s'exprimer sous la forme « Continuez tout droit en traversant les intersections... ».

Au contraire, si le rayon de courbure de la route est inférieur à ce seuil, l'instruction de guidage vocale est structurée en apposant au moins une action, un repère géographique, un attribut égocentré, une finalité, un repère géographique et un autre attribut égocentré. Elle peut s'exprimer sous la forme « Suivez la route principale en traversant les prochaines intersections... ».

On peut également envisager le cas où au moins une intersection est détectée entre la position du véhicule et la prochaine manœuvre à effectuer, où aucun changement de route n'est prévu, et où aucun changement de voie n'est souhaitable compte tenu de la prochaine manœuvre à effectuer. Dans cette situation, le module de traitement 25 est ici encore programmé pour générer une instruction de guidage vocale qui dépend de la courbure de la route.

Ainsi, si le rayon de courbure de la route est supérieur à un seuil prédéterminé, l'instruction de guidage vocale est structurée en apposant au moins une action, un repère géographique, un attribut égocentré, une finalité, un repère géographique, concaténés avec une autre action, un critère de familiarité, un autre repère géographique, et un autre attribut égocentré. Elle peut s'exprimer sous la forme « Continuez tout droit en traversant les intersections et restez bien sur votre voie... ».

Au contraire, si le rayon de courbure de la route est inférieur à ce seuil, l'instruction de guidage vocale est structurée en apposant au moins une action, un repère géographique, un attribut, une finalité, un repère géographique, concaténés avec une autre action, un critère de familiarité, un autre repère géographique, et un autre attribut égocentré. Elle peut s'exprimer sous la forme « Suivez la route principale en traversant les prochaines intersections et restez bien sur votre voie ».

On peut enfin envisager le cas où seule une intersection est détectée entre la position du véhicule et la prochaine manœuvre à effectuer, où aucun changement de route n'est prévu, mais où un changement de voie est nécessaire compte tenu de la prochaine manœuvre à effectuer. Dans cette situation, le module de traitement 25 est ici encore programmé pour générer une instruction de guidage vocale qui dépend de la courbure de la route.

Ainsi, si le rayon de courbure de la route est supérieur à un seuil prédéterminé, l'instruction de guidage vocale est structurée en apposant au moins une action, un repère géographique, un attribut, une finalité, un repère géographique, concaténés avec une autre action, un critère de familiarité, une cible. Elle peut s'exprimer sous la forme « Continuez tout droit à l'intersection puis positionnez-vous ensuite sur la voie X ».

Au contraire, si le rayon de courbure de la route est inférieur à ce seuil, l'instruction de guidage vocale est structurée en apposant au moins une action, un repère géographique, un attribut, une finalité, un repère géographique, concaténés avec une autre action, un critère de familiarité, et une cible. Elle peut s'exprimer sous la forme « Suivez la route principale à la prochaine intersection puis positionnez-vous ensuite sur la voie X ».

Lorsque la distance entre la position du véhicule et la prochaine manœuvre à effectuer (ou la durée nécessaire pour atteindre la zone de la manœuvre) est supérieure à un seuil prédéterminé (par exemple 2 km), le module de traitement 25 est programmé pour intégrer une notion de distance dans l'instruction de guidage vocale. Celle-ci peut s'exprimer sous la forme « Continuez tout droit pendant x km... ».

Lors de la phase dite de continuité, les instructions de guidage vocales peuvent également mentionner une infrastructure routière (rond-point, pont, tunnel, carrefour) ou un lieu distinctif ou remarquable (gare, station essence, enseigne lumineuse) qui sera visible (et unique) à l'approche de la manœuvre à réaliser. Ici encore, on peut envisager deux cas.

Si le rayon de courbure de la route est supérieur à un seuil prédéterminé, l'instruction de guidage vocale peut s'exprimer sous la forme « Continuez tout droit jusqu'à la station essence ».

Au contraire, si le rayon de courbure de la route est inférieur à ce seuil, l'instruction de guidage vocale peut s'exprimer sous la forme « Suivez la route principale jusqu'au prochain pont ».

Si la même manœuvre peut être réalisée à plusieurs endroits, l'instruction de guidage vocale peut s'exprimer sous la forme : « Continuer tout droit jusqu'à la prochaine instruction » ou « Continuer tout droit jusqu'au bout de la rue » ou « Continuer tout droit jusqu'à la grande tour... ».

## Revendications

1. Procédé d'élaboration d'instructions de guidage vocales à destination d'un individu, comprenant des étapes de :
- détermination par un calculateur (25) d'un trajet à effectuer,
- acquisition par un moyen d'acquisition d'images (10) d'au moins une image de l'environnement de l'individu,
- traitement de ladite image pour y détecter au moins un objet et pour caractériser ledit objet, et
- établissement et émission d'une instruction de guidage vocale fournissant à l'individu une information pour réaliser une manœuvre afin de suivre ledit trajet,
**caractérisé en ce qu'**il est prévu une étape de détermination d'un niveau de complexité de ladite manœuvre en fonction de la position du véhicule par rapport à la zone où ladite manœuvre doit être réalisée, afin qu'il tienne compte du fait qu'un changement de voie est nécessaire ou non, **en ce que**, à l'étape d'établissement, ladite instruction de guidage vocale est formulée en utilisant un indice déduit de la caractérisation dudit objet seulement si le niveau de complexité de ladite manœuvre est supérieure à un premier seuil, et
**en ce que** si le niveau de complexité de ladite manœuvre est supérieur à un second seuil strictement supérieur audit premier seuil, ladite instruction de guidage vocale est générée en utilisant deux indices.

2. Procédé d'élaboration selon la revendication précédente, dans lequel le niveau de complexité est calculé en fonction de l'un au moins des critères suivants :
- le type d'infrastructure routière présente dans la zone où ladite manœuvre doit être réalisée,
- la tension ressentie par l'individu,
- l'importance du trafic routier,
- le nombre d'objets détectés sur une partie au moins de l'image acquise,
- la connaissance de l'infrastructure routière par l'individu,
- la phase dans laquelle le véhicule se trouve,
et, si l'infrastructure routière est un rond-point, en fonction également de l'un au moins des critères suivants :
- l'angle entre un axe d'arrivée de l'individu sur le rond-point et un axe de sortie de l'individu hors du rond-point,
- l'angle entre au moins deux routes débouchant sur le rond-point,
- le nombre de routes débouchant sur le rond-point,
- la différence entre le nombre d'entrées sur le rond-point et le nombre de sorties hors du rond-point,
- le nombre de voies présentes sur le rond-point, et
- le diamètre extérieur du rond-point.

3. Procédé d'élaboration selon l'une des revendications précédentes, dans lequel, ledit indice étant un indice visuel visible par l'individu, si, entre le moment auquel l'instruction de guidage vocale a été émise vocalement et le moment où la manœuvre doit être réalisée, l'indice visuel disparait de l'environnement visible par l'individu, il est prévu une étape de génération d'une nouvelle instruction de guidage vocale n'utilisant pas ledit indice visuel.

4. Procédé d'élaboration selon l'une des revendications précédentes, dans lequel, ledit indice étant un indice visuel visible par l'individu, si, entre le moment auquel l'instruction de guidage vocale a été émise vocalement et le moment où la manœuvre doit être réalisée, un autre indice visuel non distinguable de l'indice visuel utilisé dans l'instruction de guidage vocal apparaît dans l'environnement visible par l'individu, il est prévu une étape de génération d'une nouvelle instruction de guidage vocale différente de l'instruction de guidage vocale qui a été émise vocalement.

5. Procédé d'élaboration selon l'une des revendications précédentes, dans lequel il est prévu de déterminer un coût relatif à une durée ou à une distance supplémentaire que provoquerait une erreur de suivi dudit trajet, et dans lequel le niveau de complexité est déterminé en fonction dudit coût.

6. Procédé d'élaboration selon la revendication précédente, dans lequel il est prévu de distinguer au moins deux phases distinctes et successives préalables à la réalisation de ladite manœuvre, dont une phase d'anticipation de la manœuvre au cours de laquelle une instruction de guidage vocale peut être émise pour indiquer à l'individu comment se positionner pour aborder la manœuvre et une phase de description au cours de laquelle une instruction de guidage vocale est émise pour indiquer à l'individu comment réaliser la manœuvre, et dans lequel les instructions de guidage vocales émises au cours de ces phases utilisent des indices distincts, au moins une autre phase qui suit la phase de description étant en outre prévue et au cours de laquelle une instructions de guidage vocale peut être élaborée, ladite autre phase étant :
- une phase d'accompagnement simultanée à ladite manœuvre, ou
- une phase de réassurance subséquente à ladite manœuvre et permettant d'indiquer à l'individu s'il a bien réalisé la manœuvre, ou
- une phase de continuité permettant de renseigner l'individu sur le caractère actif dudit procédé d'élaboration.

7. Procédé d'élaboration selon la revendication précédente, dans lequel si l'instruction de guidage vocale émise pendant la phase de description ne faisait référence à aucun repère visuel et que le véhicule ralentit, il est prévu au cours de la phase d'accompagnement d'émettre une instruction de guidage vocale utilisant un indice.

8. Procédé d'élaboration selon l'une des deux revendications précédentes, dans lequel, au cours de la phase de réassurance, il est prévu d'émettre une instruction de guidage vocale utilisant un repère visuel distinct du ou des indices visuels utilisés dans la ou les instructions de guidage vocales émises pendant les phases précédentes.

9. Procédé d'élaboration selon l'une des trois revendications précédentes, dans lequel, au cours de la phase de continuité, il est prévu d'élaborer une instruction de guidage vocale différente selon que le rayon de courbure de la route empruntée est inférieur ou supérieur à un seuil.

10. Procédé d'élaboration selon l'une quelconque des revendications précédentes, dans lequel, l'étape de détermination par un calculateur (25) d'un trajet à effectuer comprenant la récupération auprès d'une base de données cartographiques (20) de repères statiques visuels localisés sur ledit trajet et d'attributs associés auxdits repères statiques visuels, il est prévu de déterminer un attribut commun à plusieurs repères statiques visuels, l'instruction de guidage vocale étant formulée à l'étape d'établissement en utilisant un indice comprenant l'attribut commun lorsque l'objet est caractérisé comme comprenant l'attribut commun dans l'étape de traitement de l'image.

11. Procédé d'élaboration selon la revendication précédente, dans lequel, les repères statiques visuels étant des panneaux routiers, l'attribut commun comprend un nom qui est inscrit sur un panneau routier ou une couleur de fond d'un panneau routier, l'objet étant un panneau routier.

12. Procédé d'élaboration selon l'une quelconque des deux revendications précédentes, dans lequel, l'étape de traitement de ladite image comprenant la détection de plusieurs objets, le procédé d'élaboration comprend en outre une étape de classification des objets détectés, un objet caractérisé comme ayant l'attribut commun étant classé prioritaire, l'objet sélectionné pour l'étape d'établissement étant l'objet classé prioritaire.

13. Dispositif de génération d'instructions de guidage routier adaptées à l'environnement, comprenant :
- un moyen d'acquisition (10) d'images de l'environnement,
- une base de données cartographiques (20),
- un système de navigation et de géolocalisation (22),
- un module de traitement (25) adapté à recevoir et combiner des éléments provenant du moyen d'acquisition (10), de la base de données cartographiques (20) et du système de navigation et de géolocalisation (22), et
- un émetteur vocal (11) adapté à transmettre une indication à l'individu, **caractérisé en ce que** le module de traitement (25) est programmé pour mettre en œuvre un procédé selon l'une quelconque des revendications précédentes.

## Patentansprüche

1. Verfahren zum Erstellen von Sprachführungsanweisungen für eine Person, das die folgenden Schritte aufweist:
- Bestimmen einer zu fahrenden Route durch einen Rechner (25),
- Erfassen von mindestens einem Bild der Umgebung der Person durch ein Bilderfassungsmittel (10),
- Verarbeiten des Bildes, um darin mindestens ein Objekt zu erkennen und um das Objekt zu charakterisieren, und
- Erstellen und Senden einer Sprachführungsanweisung, die der Person Informationen zur Durchführung eines Manövers liefert, um der genannten Route zu folgen, **dadurch gekennzeichnet, dass** ein Schritt zum Bestimmen eines Komplexitätsgrads des Manövers in Abhängigkeit von der Position des Fahrzeugs in Bezug auf den Bereich, in dem das Manöver durchgeführt werden soll, vorgesehen ist, um zu berücksichtigen, ob ein Spurwechsel erforderlich ist oder nicht,
dass im Schritt des Erstellens die Sprachführungsanweisung unter Verwendung eines aus der Charakterisierung des Objekts abgeleiteten Hinweises nur dann formuliert wird, wenn der Grad der Komplexität des Manövers über einem ersten Schwellenwert liegt, und dass, wenn der Grad der Komplexität des Manövers über einem zweiten Schwellenwert liegt, der strikt größer als der erste Schwellenwert ist, die Sprachführungsanweisung unter Verwendung von zwei Hinweisen generiert wird.

2. Erstellverfahren nach dem vorhergehenden Anspruch, wobei der Grad der Komplexität auf der Grundlage von mindestens einem der folgenden Kriterien berechnet wird:
- die Art der Straßeninfrastruktur, die in dem Gebiet vorhanden ist, in dem das besagte Manöver durchgeführt werden soll,
- die von der Person empfundene Anspannung,
- das Ausmaß des Straßenverkehrs,
- die Anzahl der Objekte, die zumindest auf einem Teil des erfassten Bildes erkannt wurden,
- die Kenntnis der Straßeninfrastruktur durch die Person,
- die Phase, in der sich das Fahrzeug befindet,
und, wenn es sich bei der Straßeninfrastruktur um einen Kreisverkehr handelt, zusätzlich auf der Grundlage von mindestens einem der folgenden Kriterien:
- der Winkel zwischen einer Ankunftsachse der Person im Kreisverkehr und einer Ausfahrtsachse der Person aus dem Kreisverkehr,
- der Winkel zwischen mindestens zwei Straßen, die in den Kreisverkehr münden,
- die Anzahl der Straßen, die in den Kreisverkehr münden,
- die Differenz zwischen der Anzahl der Einfahrten in den Kreisverkehr und der Anzahl der Ausfahrten aus dem Kreisverkehr,
- die Anzahl der Fahrspuren im Kreisverkehr und
- der Außendurchmesser des Kreisverkehrs.

3. Erstellverfahren nach einem der vorhergehenden Ansprüche, wobei, da der Hinweis ein für die Person sichtbarer visueller Hinweis ist, wenn zwischen dem Zeitpunkt, zu dem die Sprachführungsanweisung stimmlich ausgegeben wurde, und dem Zeitpunkt, zu dem das Manöver ausgeführt werden soll, der visuelle Hinweis aus der für die Person sichtbaren Umgebung verschwindet, ein Schritt zum Erzeugen einer neuen Sprachführungsanweisung vorgesehen ist, die den visuellen Hinweis nicht verwendet.

4. Erstellverfahren nach einem der vorhergehenden Ansprüche, wobei, da der Hinweis ein für die Person sichtbarer visueller Hinweis ist, wenn zwischen dem Zeitpunkt, zu dem die Sprachführungsanweisung stimmlich ausgegeben wurde, und dem Zeitpunkt, zu dem das Manöver ausgeführt werden soll, ein weiterer visueller Hinweis, der nicht von dem in der Sprachführungsanweisung verwendeten visuellen Hinweis unterscheidbar ist, in der für die Person sichtbaren Umgebung auftritt, ein Schritt zum Erzeugen einer neuen Sprachführungsanweisung vorgesehen ist, die sich von der Sprachführungsanweisung unterscheidet, die stimmlich ausgegeben wurde.

5. Erstellverfahren nach einem der vorhergehenden Ansprüche, wobei vorgesehen ist, Kosten zu bestimmen, die sich auf eine zusätzliche Zeit oder Distanz beziehen, die durch einen Fehler bei der Verfolgung der Route verursacht würde, und wobei der Grad der Komplexität in Abhängigkeit von diesen Kosten bestimmt wird.

6. Erstellverfahren nach dem vorhergehenden Anspruch, wobei vorgesehen ist, mindestens zwei verschiedene und aufeinanderfolgende Phasen vor der Durchführung des Manövers zu unterscheiden, darunter eine Phase der Antizipation des Manövers, in der eine Sprachführungsanweisung ausgegeben werden kann, um der Person mitzuteilen, wie sie sich positionieren muss, um das Manöver anzugehen, und eine Beschreibungsphase, in der eine Sprachführungsanweisung ausgegeben wird, um der Person mitzuteilen, wie sie das Manöver durchführen soll, und wobei die in diesen Phasen ausgegebenen Sprachführungsanweisungen unterschiedliche Hinweise verwenden, wobei ferner mindestens eine weitere Phase vorgesehen ist, die auf die Beschreibungsphase folgt und in der eine Sprachführungsanweisung erstellt werden kann, wobei die weitere Phase Folgendes ist:
- eine Begleitphase, die gleichzeitig mit dem genannten Manöver stattfindet, oder
- eine Rückversicherungsphase, die sich an das Manöver anschließt und der Person signalisiert, dass sie das Manöver erfolgreich durchgeführt hat, oder
- eine Kontinuitätsphase, die es ermöglicht, die Person über den aktiven Charakter des Erstellverfahrens zu informieren.

7. Erstellverfahren nach dem vorhergehenden Anspruch, wobei, wenn die während der Beschreibungsphase ausgegebene Sprachführungsanweisung keinen Bezug auf eine visuelle Markierung hatte und das Fahrzeug langsamer wird, während der Begleitphase vorgesehen ist, eine Sprachführungsanweisung auszugeben, die einen Hinweis verwendet.

8. Erstellverfahren nach einem der beiden vorhergehenden Ansprüche, wobei während der Rückversicherungsphase eine Sprachführungsanweisung ausgegeben wird, die eine visuelle Markierung verwendet, die sich von der oder den visuellen Markierung(en) unterscheidet, die in der oder den in den vorhergehenden Phasen ausgegebenen Sprachführungsanweisung(en) verwendet werden.

9. Erstellverfahren nach einem der drei vorhergehenden Ansprüche, wobei während der Kontinuitätsphase vorgesehen ist, eine unterschiedliche Sprachführungsanweisung zu erstellen, je nachdem, ob der Krümmungsradius der befahrenen Straße unter oder über einem Schwellenwert liegt.

10. Erstellverfahren nach einem der vorhergehenden Ansprüche, wobei der Schritt des Bestimmens einer zu fahrenden Route durch einen Rechner (25) das Abrufen von auf der Route lokalisierten visuellen statischen Markierungen aus einer Kartendatenbank (20) und von Attributen, die mit den visuellen statischen Markierungen verbunden sind, aufweist, wobei vorgesehen ist, ein Attribut zu bestimmen, das mehreren visuellen statischen Markierungen gemeinsam ist, wobei die Sprachführungsanweisung im Schritt des Erstellens unter Verwendung eines Hinweises formuliert wird, der das gemeinsame Attribut aufweist, wenn das Objekt im Schritt der Bildverarbeitung als das gemeinsame Attribut aufweisend charakterisiert wird.

11. Erstellverfahren nach dem vorhergehenden Anspruch, wobei die visuellen statischen Markierungen Straßenschilder sind, das gemeinsame Attribut einen Namen aufweist, der auf einem Straßenschild steht, oder eine Hintergrundfarbe eines Straßenschildes, wobei das Objekt ein Straßenschild ist.

12. Erstellverfahren nach einem der beiden vorhergehenden Ansprüche, wobei der Schritt der Bildverarbeitung das Erfassen mehrerer Objekte aufweist, wobei das Erstellverfahren darüber hinaus einen Schritt des Klassifizierens der erfassten Objekte aufweist, wobei ein Objekt, das dadurch charakterisiert ist, dass es das gemeinsame Attribut aufweist, als vorrangig eingestuft wird, wobei das für den Schritt des Erstellens ausgewählte Objekt das als vorrangig eingestufte Objekt ist.

13. Vorrichtung zum Erzeugen von an die Umgebung angepassten Routenführungsanweisungen, die Folgendes aufweist:
- ein Mittel zur Erfassung (10) von Bildern der Umgebung,
- eine Kartendatenbank (20),
- ein Navigations- und Geolokalisierungssystem (22),
- ein Verarbeitungsmodul (25), das dazu geeignet ist, Elemente aus dem Mittel zur Erfassung (10), der Kartendatenbank (20) und dem Navigations- und Geolokalisierungssystem (22) zu empfangen und zu kombinieren, und
- einer Sprachausgabe (11), die dazu geeignet ist, der Person einen Hinweis zu übermitteln,
**dadurch gekennzeichnet, dass** das Verarbeitungsmodul (25) so programmiert ist, dass es ein Verfahren nach einem der vorhergehenden Ansprüche ausführt.

## Claims

1. Method for generating voice guidance instructions intended for an individual, comprising steps of:
- determining, by means of a computer (25), a route to be taken,
- acquiring, by means of an image-acquiring means (10), at least one image of the environment of the individual,
- processing said image with a view to detecting therein at least one object and to characterizing said object, and
- establishing and transmitting a voice guidance instruction informing the individual how to perform a manoeuvre in order to follow said route,
**characterized in that** provision is made for a step of determining a level of complexity of said manoeuvre depending on the position of the vehicle with respect to the zone in which said manoeuvre must be performed, in order to take into account whether a change of lane is necessary or not,
**in that**, in the establishing step, said voice guidance instruction is formulated using a cue deduced from the characterization of said object only if the level of complexity of said manoeuvre is higher than a first threshold, and
**in that** if the level of complexity of said manoeuvre is higher than a second threshold strictly higher than said first threshold, said voice guidance instruction is generated using two cues.

2. Generating method according to the preceding claim, wherein the level of complexity is computed depending on at least one of the following criteria:
- the type of road infrastructure present in the zone in which said manoeuvre must be performed,
- the tension felt by the individual,
- the density of road traffic,
- the number of objects detected in at least one portion of the acquired image,
- the individual's knowledge of the road infrastructure,
- the phase in which the vehicle is currently,
and, if the road infrastructure is a roundabout, also depending on at least one of the following criteria:
- the angle between an axis of arrival of the individual at the roundabout and an axis of exit of the individual from the roundabout,
- the angle between at least two roads leading to the roundabout,
- the number of roads leading to the roundabout,
- the difference between the number of entrances to the roundabout and the number of exits from the roundabout,
- the number of lanes present in the roundabout, and
- the outside diameter of the roundabout.

3. Generating method according to one of the preceding claims, wherein, said cue being a visual cue visible to the individual, if, between the moment at which the voice guidance instruction was transmitted vocally and the moment when the manoeuvre must be performed, the visual cue disappears from the environment visible to the individual, provision is made for a step of generating a new voice guidance instruction not using said visual cue.

4. Generating method according to one of the preceding claims, wherein, said cue being a visual cue visible to the individual, if, between the moment at which the voice guidance instruction was transmitted vocally and the moment when the manoeuvre must be performed, another visual cue that is indistinguishable from the visual cue used in the voice guidance instruction appears in the environment visible to the individual, provision is made for a step of generating a new voice guidance instruction different from the voice guidance instruction that was transmitted vocally.

5. Generating method according to one of the preceding claims, wherein provision is made to determine a cost relating to an additional time or distance that an error in following said route would cause, and wherein the level of complexity is determined depending on said cost.

6. Generating method according to the preceding claim, wherein provision is made to distinguish between at least two distinct and successive phases prior to the performance of said manoeuvre, namely a manoeuvre-anticipation phase, in which a voice guidance instruction may be transmitted to indicate to the individual how to position himself to approach the manoeuvre, and a description phase, in which a voice guidance instruction is transmitted to indicate to the individual how to perform the manoeuvre, and wherein the voice guidance instructions transmitted in these phases use distinct cues, provision further being made for at least one other phase which follows the description phase and in which a voice guidance instruction may be generated, said other phase being:
- an accompaniment phase simultaneous to said manoeuvre, or
- a reassurance phase subsequent to said manoeuvre and allowing it to be indicated to the individual whether he has performed the manoeuvre correctly, or
- a continuity phase allowing the individual to be informed of the active character of said generating method.

7. Generating method according to the preceding claim, wherein, if the voice guidance instruction transmitted during the description phase did not refer to any visual indicator and the vehicle slows down, provision is made in the accompaniment phase to transmit a voice guidance instruction using a cue.

8. Generating method according to either one of the two preceding claims, wherein, in the reassurance phase, provision is made to transmit a voice guidance instruction using a visual indicator distinct from the one or more visual cues used in the one or more voice guidance instructions transmitted during the preceding phases.

9. Generating method according to one of the three preceding claims, wherein, in the continuity phase, provision is made to generate a different voice guidance instruction depending on whether the radius of curvature of the road taken is lower or higher than a threshold.

10. Generating method according to any one of the preceding claims, wherein, the step of determining, by means of a computer (25), a route to be taken comprising retrieving, from a map database (20), static visual indicators located on said route and attributes associated with said static visual indicators, provision is made to determine an attribute common to a plurality of static visual indicators, the voice guidance instruction being formulated in the establishing step using a cue comprising the common attribute when the object is characterized as comprising the common attribute in the image-processing step.

11. Generating method according to the preceding claim, wherein, the static visual indicators being road signs, the common attribute comprises a name that is written on a road sign or a background colour of a road sign, the object being a road sign.

12. Generating method according to either one of the two preceding claims, wherein, the step of processing said image comprising detecting a plurality of objects, the generating method further comprises a step of classifying the detected objects, an object characterized as having the common attribute being prioritized, the object selected for the establishing step being the prioritized object.

13. Device for generating route guidance instructions that are tailored to the environment, comprising:
- a means (10) for acquiring images of the environment,
- a map database (20),
- a navigation and geolocation system (22),
- a processing module (25) suitable for receiving and combining elements originating from the acquiring means (10), from the map database (20) and from the navigation and geolocation system (22), and
- a voice transmitter (11) suitable for transmitting an indication to the individual,
**characterized in that** the processing module (25) is programmed to implement a method according to any one of the preceding claims.
